(19) **Europäisches Patentamt**

**European Patent Office**

**Office européen des brevets**

(11) **EP 0 704 856 B1**

(12) **EUROPEAN PATENT SPECIFICATION**

(45) Date of publication and mention
of the grant of the patent:
**10.03.1999 Bulletin 1999/10**

(51) Int Cl.⁶: **G21C 3/32**, G21C 3/328

(21) Application number: **95112551.7**

(22) Date of filing: **09.08.1995**

(54) **Square BWR nuclear fuel assembly with 10 x 12 triangular array layout**

Viereckiges Siedewasserkernreaktorbrennstabbündel mit 10x12 dreieckiger Musteranordnung

Assemblage combustible à section carrée pour réacteur nucléaire à eau bouillante avec réseau 10x12 à disposition triangulaire

(84) Designated Contracting States:
**DE ES SE**

(30) Priority: **30.09.1994 US 316657**

(43) Date of publication of application:
**03.04.1996 Bulletin 1996/14**

(73) Proprietor: **Siemens Power Corporation**
**Richland, WA 99352 (US)**

(72) Inventors:
• **Walters, Kenneth V.**
**Kennewick, WA 99336 (US)**
• **Williamson, Harold E.**
**Richland, WA 99352 (US)**

(74) Representative:
**Kahlhöfer, Hermann, Dipl.-Phys. et al**
**Patent- und Rechtsanwälte**
**Bardehle, Pagenberg, Dost, Altenburg,**
**Geissler, Isenbruck**
**Uerdinger Str. 5**
**40474 Düsseldorf (DE)**

(56) References cited:
**EP-A- 0 099 322     US-A- 5 299 244**

• PATENT ABSTRACTS OF JAPAN vol. 16, no. 424 (P-1415) 7 September 1992 & JP-A-04 143 694 (HITACHI) 18 May 1992
• DATABASE WPI Week 8751, Derwent Publications Ltd., London, GB; AN 87-357910 & JP-A-62 259 086 (HITACHI) 11 November 1987
• PATENT ABSTRACTS OF JAPAN vol. 17, no. 553 (P-1625) 5 October 1993 & JP-A-05 157 867 (HITACHI) 25 June 1993

**Description**

Field of the Invention

The present invention relates generally to nuclear fuel assemblies for nuclear reactors, and more particularly to fuel rod configurations for boiling water reactors fuel assemblies that have a square cross-sectional area, as for example shown in US-A- 5 299 244 or JP-A- 62 259 086.

Background of the Invention

Current operating boiling water reactors (BWR) utilize fuel assemblies that have a square cross-sectional area in which the nuclear fuel rods are located. Light water reactor designs employ a square array for the layout for control rod drives and consequently the area allocated for fuel assemblies is square. The fuel rods are distributed in the available square area so that there will be an approximately uniform distribution of coolant/moderator area for each fuel rod. The approach has been to arrange the fuel rods within the available square area so that there was an equal number of rows and columns of fuel rods with a uniform center-to-center distance (i.e. pitch) between fuel rods. This arrangement is referred to as a square lattice, as lines drawn through adjacent fuel rod centers divide the area into a number of uniform squares. The reactor power and power distribution (axial, radial and local peaking) set the volumetric power density generated in the fuel rods. The minimum spacing between fuel rods to assure adequate cooling of adjacent fuel rod surfaces, which has been determined by heat transfer tests, must be provided with allowance for manufacturing tolerances and predicted fuel rod bowing during operation. For a uniform array of fuel rods, the required minimum rod-to-rod spacing limits the maximum allowable fuel rod diameter for that array. Uniform distribution of uranium fuel and coolant moderator (i.e. water) has been typically obtained by selecting an equal number of rows and columns of fuel rods in a square lattice array and positioning the center of the nuclear fuel rods at the corners of the squares. Thus, the number of rows of fuel rods equal the number of fuel rods in a row. The fuel rod array is sized to obtain sufficient heat transfer area for the volume of nuclear fuel in a fuel rod to enable the removal of the heat generated by the fuel within temperature limits of the materials used for the fuel rod.

Boiling water reactor (BWR) fuel assemblies typically have such a fuel rod array in which the fuel rods are arranged in rows with the same number of fuel rods in each row as there are rows in the array. In adjacent rows, fuel rods are located with their centers at the corners of squares. Such square rod arrays or lattices are commonly named according to the number of rows of rods and number of rods in a row such as 8x8, 9x9, 10x10, etc. Regardless of the number of rows of rods, each array is constrained to fit within a standard size fuel assembly channel.

The use of a square lattice whereby fuel rods are located with their centers at the corners of squares results in a larger flow area at the center of the square formed by four fuel rods than is necessary. This is an inefficient use of the cross-sectional area within a fuel assembly channel. It is desirable to reduce the fuel rod linear heat generation rate and the internal fuel rod temperature for a given fuel assembly power level by increasing the number of fuel rods. This is done, for example, by changing from a 10x10 fuel rod array to an 11x11 array. Since the fuel rod array is constrained to fit within the fixed dimensions of a standard fuel assembly channel and is required to have a certain minimum fuel rod surface to surface and fuel rod surface to channel wall surface spacing, increasing the number of rows of fuel rods and number of fuel rods in a row necessitates a decrease in the fuel rod diameter. The fuel rod diameter must be reduced to maintain surface to surface spacing since the fuel rod center to center distance is reduced. The spacing between rods to allow for adequate cooling and to accommodate fuel rod bow cannot be reduced in proportion to the rod-to-rod pitch. As the quantity of the fuel rods is increased in a square lattice, the increased number of fuel rods will not compensate for the required fuel rod diameter reduction with the result that the uranium loading in the fuel assembly is reduced in the more finely divided array.

For example, a 10x10 square lattice array would have a rod pitch of approximately 1,295 cm (0.51 inch) and a minimum rod surface to rod surface space that would allow for manufacturing tolerances, and rod bow to maintain adequate cooling throughout the operating life. If such a space were 0,2896 cm (0.114 inches), then the maximum rod diameter could be 1,006 cm (0.396 inch). If the square lattice array was more finely divided for example to an 11x11, then the rod pitch would be approximately 1,1786 cm (0.464 inch). The maximum rod diameter would be limited to 0,889 cm (0.35 inch) to maintain the required 0,2896 cm (0.114 inch) space between rods. The amount of space for fuel is proportional to the number of rods and their cross sectional area. The relative fuel cross sectional area for the two arrays would be

EP 0 704 856 B1

$$\frac{11 \times 11 \times (0,889)^2}{10 \times 10 \times (1,006)^2} \simeq \left(\frac{11x11 \times (0.35)^2}{10x10 \times (0.396)^2}\right) = 0.945$$

In BWR fuel assemblies, a number of fuel rod locations are reserved for use instead as water rods or a water channel to selectively increase neutron moderation for more efficient fuel utilization. If the square fuel rod array is more finely divided and if the number of reserved water rod locations remains constant, then the amount of moderating water within the water rods or water channel becomes smaller because of the smaller allowable diameter for both the fuel rods and water rods. If the number of reserved rod locations for water rods is increased as the array size is more finely divided, then the uranium loading for the fuel assembly is decreased even further. Thus, as the square fuel rod array is more finely divided and the number of water rods either increases or remains unchanged, inefficient fuel utilization as well as high fabrication costs result.

A triangular lattice array in which the centers of fuel rods are located at the vertices of a triangle is more desireable than the square lattice array in that it provides a more efficient arrangement of fuel rods while also maintaining required rod-to-rod spacing. For a specified fuel rod diameter and minimum rod-to-rod spacing, the triangular pitch allows a tighter packing of fuel rods within the given cross sectional area of the fuel assembly channel, resulting in a better allocation of area for flow of coolant water among fuel rods. The higher density of fuel rods will permit a higher loading of uranium, and better heat transfer characteristics as the coolant water is on the average in closer proximity to the fuel rod surfaces. In addition, more fuel rod heat transfer surface can be incorporated in a unit area than in a square lattice of the same pitch, and greater flexibility for internal moderation using water rods and inner water channels can be obtained. Since the higher density of fuel rods permits a higher loading of uranium as the number of fuel rods in the assembly is increased, more fuel rod locations can be reserved for water rods or water channels without causing a decrease in the uranium loading in comparison to a square lattice array which will have fewer fuel rod positions.

A triangular lattice however cannot be made to fit into a square cross-sectional area by having an equal number of rows and columns of fuel rods.

It is an object of the invention to provide a nuclear fuel assembly having a fuel rod arrangement which has the same fuel rod surface to fuel rod surface spacing and the same fuel rod surface to channel wall spacing as a square lattice array of approximately the same number of fuel rods, but with larger fuel rod diameters than could be obtained with a square lattice array of fuel rods.

Summary of the Invention

In accordance with one aspect of the invention according to claim 1, a nuclear fuel assembly for boiling water reactors is provided having a plurality of elongated parallel fuel rods supported between a lower tie plate positioned toward the bottom of the assembly and an upper tie plate positioned toward the top of the assembly, an outer channel surrounding the plurality of fuel rods and having a substantially square cross-sectional area for conducting coolant/moderator about the fuel rods from the bottom of the assembly toward the top of assembly, at least one spacer for positioning and retaining the fuel rods in a predetermined configuration, and the fuel rods being arranged with a predetermined pitch in an array of 10x12 where the centers of the fuel rods are located at the vertices of equilateral triangles. Preferred and/or advantageous embodiments are described in the dependent claims.

Brief Description of the Drawings

Figure 1 is a horizontal cross sectional view of a BWR fuel assembly having a 10x12 fuel rod arrangement with a triangular lattice in accordance with the present invention;

Figure 2 is a horizontal cross sectional view of the BWR fuel assembly shown in Figure 1 with selective fuel rods replaced by water rods or part length fuel rods; and

Figure 3 is a horizontal cross-sectional view of a BWR fuel assembly having a 10x12 fuel rod arrangement with a triangular lattice and a centrally located water channel in place of seven centrally located fuel rods.

Detailed Description of the Invention

The trend in reactor fuel design has been to increase the number of fuel rods in an assembly to more finely divide the uranium fuel so that the heat generated in the fuel may be more readily transferred to the coolant. This allows progressively more heat to be generated in an assembly but must be within limits on fuel rod power to assure reliable performance of the fuel rod. Increased power generated by a fuel assembly can (1) improve nuclear fuel utilization through greater freedom to optimize the core power distribution, (2) improve plant capacity factor by permitting more rapid power changes, or (3) increase the overall power density of the core and the plant power output. In BWRs, fuel rod array designs have progressed from 7x7 through 8x8 and 9x9 to the 10x10.

To prevent degradation of the heat transfer efficiency, a minimum separation between fuel rods is required. To be assured of the required separation, an allowance must be made for both fabrication tolerances as well as irradiation induced bow of the fuel rods.

A square lattice BWR 10x10 fuel assembly has 100 fuel rod positions available and the rod-to-rod pitch will be approximately 1,295 cm (0.51 inches). The required rod-to-rod spacing will determine the maximum allowable fuel rod diameter without degradation of heat transfer efficiency during the fuel assembly operation. This places a limit on the volume of fuel that can be incorporated in a given fuel assembly length. However, in accordance with the present invention, if the fuel rods are configured in a 10x12 triangular lattice array, then 120 fuel rod locations are made available with a larger rod diameter than in the 11x11 square lattice array, thus increasing the volume of fuel in a given fuel assembly length. In a square lattice array, the 120 potential fuel rod locations would require an 11x11 lattice. The 11x11 rod pitch would be about 1,178 cm (0.464 inch) and the maximum rod diameter would be reduced by the rod-to-rod spacing requirement so that the volume of fuel that could be incorporated in a given length of fuel assembly would be reduced to less than for the 10x12 array.

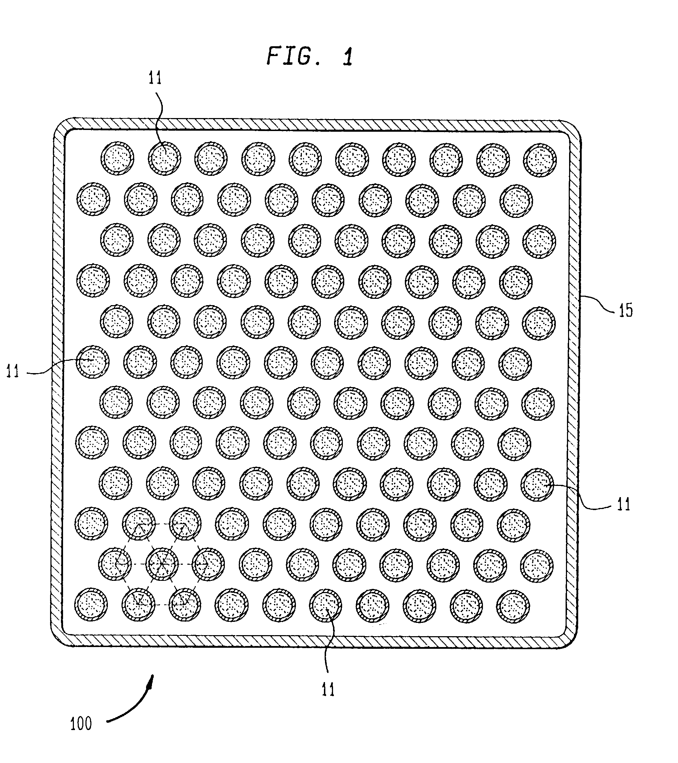

Referring to Figure 1, a boiling water reactor fuel assembly 100 has fuel rods 11 positioned within the area formed by outer channel 15. According to the prior art, a 10x10 array of fuel rods would be positioned within the area formed by the outer channel. Fuel rods 11 are arranged with their centers located at the vertices of equilateral triangles rather than the corners of squares. Six adjacent triangles having a common vertex form a hexagon. Fuel rods 11 are arranged in 12 rows with 10 rods in each row so as to fit within the confines of outer channel 15. The arrangement shown in Figure 1 is a 10x12 hexagonal BWR fuel assembly and contains 120 fuel rod locations which is very similar to a square lattice array of 11x11. The hexagonal arrangement shown in Figure 1 has the advantage that a larger fuel rod diameter can be used while maintaining the same rod surface to rod surface spacing and rod surface to channel wall spacing of a square lattice array of about the same number of fuel rods, because of the more efficient utilization of cross sectional area within the outer channel. In a square lattice array, an 11x11 arrangement would be necessary to provide 120 fuel rod locations provided by the 10x12 hexagonal arrangement. Consequently, the 11x11 rod pitch would be reduced (about 1,1786 cm = 0.464 inches) and a smaller fuel rod diameter (less than 10/11) would be necessary to maintain the required rod surface to rod surface spacing for adequate cooling. The smaller diameter fuel rods would provide a lower amount of uranium fuel per rod. Referring to the earlier example, the 11x11 lattice could have a rod diameter of 0,889 cm (0.35 inches), for a rod-surface-to-rod surface spacing of 0,2896 cm (0.114 inches). The 10x12 triangular lattice would have a rod pitch of 1,2319 cm (0.485 inches) and could have a rod diameter of about 0,9423 cm (0.371 inches), providing an increase in relative fuel cross sectional area of approximately

$$\frac{120 \times (0,9423)^2}{121 \times (0,889)^2} = \left(\frac{120 \times (.371)^2}{121 \times (.35)^2}\right) = 1.11$$

Thus, the triangular lattice arrangement of Figure 1 enables the use of larger fuel rod diameters that could be used in an 11x11 array. Because of the larger fuel rod diameter(s), more water rods and part length fuel rods can be used while maintaining the fuel assembly uranium content. Thus, increased diameter of fuel rods, permissible in a triangular lattice relative to a square lattice, allows a greater fraction of the fuel rod positions to be used for water channels, water rods, part length fuel rods, and/or part length fuel rods having part length water rods.

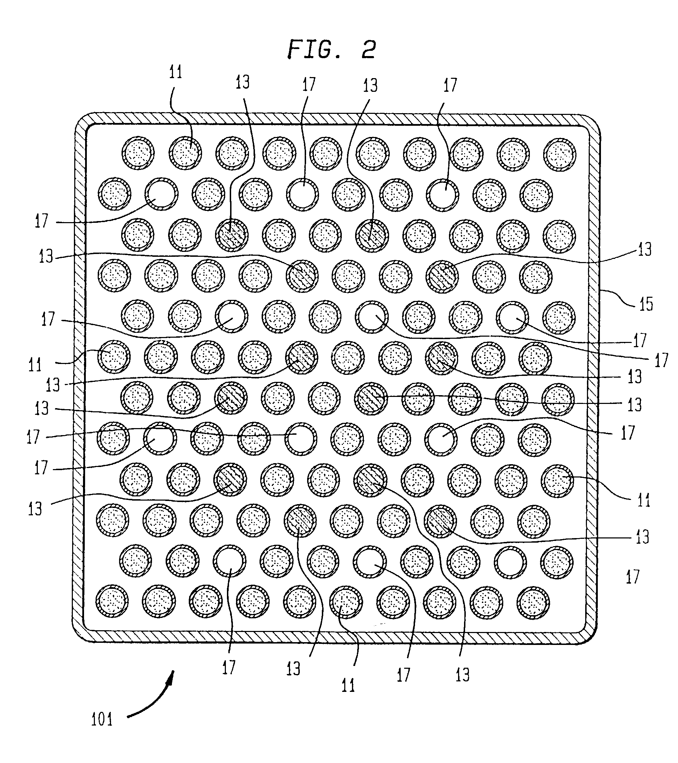

Referring to Figure 2, fuel rods 11, water rods 17 and part length fuel rods 13 are positioned in fuel assembly 10 so that every fuel rod 11 and part length fuel rod 13 is: (a) directly adjacent to either a water rod 17 or the outer channel 15; or (b) has a direct line of sight to a water rod or the outer channel. This configuration results in a greater probability that fast neutrons born by fission in the fuel rods will escape resonance capture in another fuel rod and instead be thermalized in the water rods or in the water outside of the fuel channel. The higher probability of neutron thermalization produces a larger thermal neutron source throughout the fuel assembly with resultant increased fuel utilization. This arrangement could not be achieved in a square lattice fuel assembly having a similar number of possible rod locations without severely reducing the uranium content of the fuel assembly. Satisfactory uranium loading can be maintained in the triangular lattice because of the larger number of fuel rod locations and the inherently larger possible uranium loading.

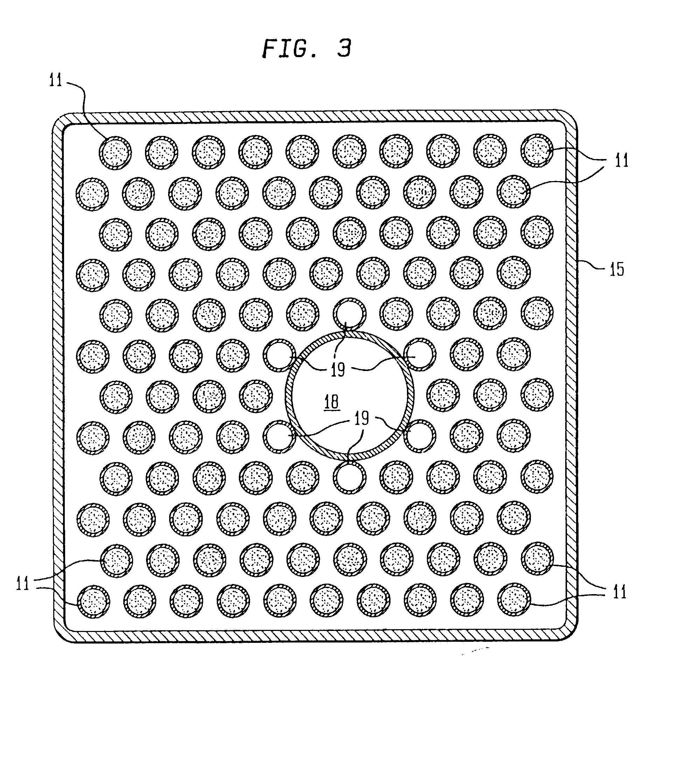

In most cases, some fuel rod positions will be occupied by water rods or water channels to add moderation and obtain better uranium utilization. The 10x12 triangular lattice array shown in Fig. 1 makes about 6 more fuel rod positions available for water rods or channels while maintaining an equal volume for uranium fuel as a 10x10 square lattice array. BWR fuel assemblies are typically under-moderated at their centers. Accordingly, supplemental water moderation is most effective when placed near the center of the assembly cross-section. Referring to Fig. 3, a center water channel composed of (a) a tube 18 (having a diameter up to two rod pitches and a fuel rod diameter) and (b) six tubes 19 (each having the diameter of a fuel rod) is substituted for 13 fuel rod positions near the assembly center. Water channel assembly which is comprised of tubes 18 and 19 fit into the triangular array so as not to disrupt the uniformity of coolant area distribution.

While the present invention has been particularly shown and described with reference to preferred embodiments thereof, it will be understood by those skilled in the art that various changes in form and details may be made therein without departing from the scope of the invention as claimed in the appended claims.

### Claims

1.  A nuclear fuel assembly (100) for boiling water reactors, the assembly (100) having a plurality of elongated parallel fuel rods (11) supported between a lower tie plate positioned toward the bottom of the assembly (100) and an upper tie plate positioned toward the top of the assembly (100),

    an outer channel (15) surrounding the plurality of fuel rods (11) and having a substantially square cross-sectional area for conducting coolant/moderator about the fuel rods (11) from the bottom of the assembly (100) toward the top of the assembly (100),
    at least one spacer for positioning and retaining the fuel rods (11) in a predetermined configuration, where the centers of the fuel rods (11) are located at the vertices of equilateral triangles,

    **characterized in that**
    the fuel rods (11) are arranged with a predetermined pitch in an array of 10 x 12.

2.  A nuclear fuel assembly (100) according to claim 1, characterized in that it is provided with:

    a plurality of spaced-apart part length fuel rods (13) supported at their lowermost ends to the lower tie plate, and extending upwards therefrom into an upper portion of the fuel assembly (100),
    a plurality of water rods (17) for conducting coolant/moderator therethrough from the bottom of the assembly (100) toward the top of the assembly (100),
    the outer channel (15) furthermore surrounding the part length fuel rods (13),
    the full length fuel rods (11), part length fuel rods (13) and water rods (17) being arranged with a predetermined pitch in the array of 10 x 12, where the centers of the full length fuel rods (11), the part length fuel rods (13), and the water rods (17) are located at the vertices of equilateral triangles.

3.  A nuclear fuel assembly (100) according to one of the claims 1 or 2, characterized in that there is provided

    a center water channel disposed towards the center of the cross-sectional area of the assembly (100) and having at least one wall for conducting coolant/moderator therethrough from the bottom of the assembly (100) toward the top of the assembly (100),
    a plurality of water rods (19) for conducting coolant/moderator therethrough from the bottom of the assembly toward the top of the assembly,
    the fuel rods (11), water rods (19) and center water channel being arranged with a predetermined pitch in an array of 10 x 12.

4.  The fuel assembly (100) according to claim 3, characterized in that the center water channel comprises a tube (18) having a diameter greater than the diameter of the fuel rod (11) and each one of the plurality of water rods (19) has a diameter substantially the same as the diameter of the fuel rod (11).

5.  The fuel assembly (100) according to claim 4, characterized in that the tube (18) which comprises the center water channel has a diameter comprising of two rod pitches and a fuel rod diameter.

**Patentansprüche**

1. Nuklearbrennstoffanordnung (100) für Siedewasserreaktoren, wobei die Anordnung (100) eine Mehrzahl von langgestreckten parallelen Brennstäben (11) enthält, welche zwischen einer im Bodenbereich der Anordnung (100) positionierten Bodenplatte und einer im Deckenbereich der Anordnung (100) positionierten Deckenplatte gehaltert werden,

   mit einem äußeren Kanal (15), der diese Mehrzahl von Brennstäben (11) umgibt und eine im wesentlichen quadratische Querschnittsfläche aufweist um Kühlmittel/Moderator vom Bodenbereich der Anordnung (100) zum Deckenbereich der Anordnung (100) durch die Brennstäbe (11) zu leiten
   und mit wenigstens einem Abstandshalter, der die Brennstäbe (11) in einer vorbestimmten Konfiguration positioniert und hält, wobei die Mitten der Brennstäbe (11) in den Eckpunkten gleichseitiger Dreiecke angeordnet sind, dadurch gekennzeichnet, daß
   die Brennstäbe (11) mit einem vorbestimmten Versatz in einem Areal von 10 x 12 angeordnet sind.

2. Nuklearbrennstoffanordnung (100) nach Anspruch 1, dadurch gekennzeichnet, daß sie ausgestattet ist mit:

   einer Mehrzahl voneinander beabstandeter Brennstäbe (13) geringerer Länge, welche an ihrem tiefsten Ende durch eine Bodenplatte gehaltert sind und von dort sich in einem oberen Bereich der Anordnung (100) erstrekken,
   einer Mehrzahl von Wasserstäben (17), um Kühlmittel/Moderator vom Boden der Anordnung (100) zur Decke der Anordnung (100) durchzuleiten,
   wobei der äußere Kanal (15) weiterhin die Brennstäbe (13) geringerer Länge umgibt,
   wobei die Brennstäbe (11) voller Länge, die Brennstäbe (13) geringerer Länge und die Wasserstäbe (17) mit einem vorbestimmten Versatz in einem Areal von 10 x 12 und die Mitten der Brennstäbe (11) voller Länge, der Brennstäbe (13) geringerer Länge und der Wasserstäbe (17) in den Eckpunkten gleichseitiger Dreiecke angeordnet sind.

3. Nuklearbrennstoffanordnung (100) nach einem der Ansprüche 1 oder 2, dadurch gekennzeichnet, daß sie ausgestattet ist mit:

   einem zentralen Wasserkanal, welcher etwa mittig in der Querschnittsfläche der Anordnung (100) angeordnet ist, und wenigstens eine Wand hat, um Kühlmittel/Moderator vom Boden der Anordnung (100) zur Decke der Anordnung (100) durchzuleiten,
   eine Mehrzahl von Wasserstäben (19), um Kühlmittel/Moderator vom Boden der Anordnung (100) zur Decke der Anordnung (100) durchzuleiten,
   wobei die Brennstäbe (11), Wasserstäbe (19) und der zentrale Wasserkanal mit einem vorbestimmten Versatz in einem Areal von 10 x 12 angeordnet sind.

4. Brennstoffanordnung (100) nach Anspruch 3, dadurch gekennzeichnet, daß der zentrale Wasserkanal ein Rohr (18) aufweist, welches einen größeren Durchmesser als der Durchmesser des Brennstabes (11) aufweist, wobei jeder der Mehrzahl von den Wasserstäben (19) einen Durchmesser aufweist, der im wesentlichen dem Durchmesser des Brennstabes (11) entspricht.

5. Brennstoffanordnung (100) nach Anspruch 4, dadurch gekennzeichnet, daß das Rohr (18), welches der zentrale Wasserkanal aufweist, einen Durchmesser hat, welcher zwei Brennstabversätze und einen Brennstabdurchmesser umfaßt.

**Revendications**

1. Assemblage (100) combustible nucléaire de réacteurs à eau bouillante, l'assemblage (100) ayant une pluralité de crayons (11) combustibles oblongs, parallèles, supportés entre une plaque d'attache inférieure placée vers le fond de l'assemblage (100) et une plaque d'attache supérieure placée vers le haut de l'assemblage (100),

un boîtier canal (15) extérieur entourant la pluralité de crayons (11) combustibles et ayant une surface de section transversale sensiblement carrée pour conduire de l'agent réfrigérant/du modérateur autour des crayons (11) combustibles du bas de l'assemblage (100) vers le haut de l'assemblage (100),

au moins une pièce d'espacement pour mettre en position et retenir les crayons (11) combustibles dans une configuration déterminée à l'avance, les centres des crayons (11) combustibles étant disposés aux sommets de triangles équilatéraux,

caractérisé en ce que
les crayons (11) combustibles sont disposés suivant un pas déterminé à l'avance en une grappe de 10 x 12.

2. Assemblage (100) combustible nucléaire suivant la revendication 1, caractérisé en ce qu'il est muni:

d'une pluralité de crayons (13) combustibles de longueur partielle, disposés à distance les uns des autres, supportés à leurs extrémités la plus basse vers la plaque d'attache inférieure et s'en étendant vers le haut dans une partie supérieure de l'assemblage (100) combustible,
d'une pluralité de crayons (17) d'eau pour y conduire l'agent réfrigérant/le modérateur du bas de l'assemblage (100) au haut de l'assemblage (100),
le boîtier canal (15) extérieur entourant en outre les crayons combustibles (13) de longueur partielle,
les crayons (11) combustibles de pleine longueur, les crayons (13) combustibles de longueur partielle et les crayons (17) d'eau étant disposés suivant un pas déterminé à l'avance en la grappe de 10 x 12, les centres des crayons (11) combustibles de pleine longueur, des crayons (13) combustibles de longueur partielle et des crayons (17) d'eau étant disposés aux sommets de triangles équilatéraux.

3. Assemblage (100) combustible nucléaire suivant l'une des revendications 1 ou 2, caractérisé en ce qu'il est prévu

un canal central d'eau disposé vers le centre de la section transversale de l'assemblage (100) et ayant au moins une paroi pour y conduire de l'agent réfrigérant/du modérateur du bas de l'assemblage (100) au haut de l'assemblage (100),
une pluralité de crayons (19) d'eau pour y conduire de l'agent réfrigérant/du modérateur du bas de l'assemblage au haut de l'assemblage,
les crayons (11) combustibles, les crayons (19) d'eau et le canal central d'eau étant disposés suivant un pas déterminé à l'avance en une grappe de 10 x 12.

4. Assemblage (100) combustible suivant la revendication 3, caractérisé en ce que le canal central d'eau comprend un tube (18) d'un diamètre plus grand que le diamètre du crayon (11) combustible et chacun de la pluralité des crayons (19) d'eau a sensiblement le même diamètre que le diamètre du crayon (11) combustible.

5. Assemblage (100) combustible suivant la revendication 4, caractérisé en ce que le tube (18) qui représente le canal central d'eau a un diamètre représentant deux pas de crayon et un diamètre de crayon combustible.

FIG. 1

# FIG. 2

101

FIG. 3